# EUROPÄISCHE PATENTSCHRIFT

(11) **EP 0 966 657 B1**
(45) Veröffentlichungstag und Bekanntmachung des Hinweises auf die Patenterteilung: **02.01.2003**
(21) Anmeldenummer: 98910734.7
(22) Anmeldetag: 06.03.1998
(51) Int. Cl.: G01J 3/28

(54) **HADAMARD-SPEKTROMETER**
HADAMARD SPECTROMETER
SPECTROMETRE HADAMARD

(30) Priorität: 13.03.1997 DE 19710143
(43) Veröffentlichungstag der Anmeldung: 29.12.1999
(73) Patentinhaber: INSTITUT FÜR PHYSIKALISCHE HOCHTECHNOLOGIE E.V., 07743 Jena (DE); Daimler Benz Aerospace Jena-Optronik GmbH, 07745 Jena (DE); INSTITUT FÜR MIKROTECHNIK MAINZ GmbH, 55129 Mainz-Hechtsheim (DE); Entec GmbH, 98704 Langewiesen (DE)
(72) Erfinder: DIEHL, Torsten, D-64405 Fischbachtal (DE); LENK, Norbert, D-98693 Ilmenau (DE); RIESENBERG, Rainer, D-07749 Jena (DE); SCHÖNEICH, Jürgen, D-07745 Jena (DE)
(74) Vertreter: Pfeiffer, Rolf-Gerd, Dipl.-Phys.
(86) Internationale Anmeldenummer: EP9801312
(87) Internationale Veröffentlichungsnummer: WO98040709

(56) Entgegenhaltungen:
- US-A- 5 050 989
- US-A- 5 257 086

## Beschreibung

Die Erfindung betrifft ein Hadamard-Spektrometer, welches z.B. unter Anwendung der Infrarot-Absorption den Nachweis einer Reihe mehratomiger Gase oder Flüssigkeiten ermöglicht. Derartige Geräte sollen insbesondere zur Emissions-, Arbeitsplatz- und Umweltüberwachung zum Einsatz gelangen.

Der Erfindung am nächsten kommt ein Spektrofotometer, das in US-PS 5,257,086 beschrieben ist, welches unter Einsatz der auch für den Verwendungszweck bekannten Hadamard-Transformation eine mathematische Auswertung gewonnener spektraler Daten und damit eine Spektralanalyse ermöglicht. Das dort beschriebene Spektrofotometer verfügt als wesentliche und für ein Spektrometer typische Baugruppen über ein Lichtquellenarray, dessen einzelne Leuchtquellen zueinander unterschiedlicher Wellenlängen gemäß der Hadamard-Methode anstenerbar sind, ein abbildendes Beugungsgitter, einen hinter einem Spalt angeordneten Detektor zum Empfang der spektralen Signale und elektronische Baugruppen, die eine sehr schnelle spekirale Analyse einer zu untersuchenden Probe gewährleisten. Der wesentliche Vorteil, der durch die Hadamard-Transformation bedingt ist, besteht in einer erheblichen Verbesserung des Signal/Rausch-Verhältnisses. Ein Nachteil der in US-PS 5,257,086 beschriebenen Anordnung besteht darin, daß zunächst LED's als Leuchtquellen vorhanden sein müssen, die dem zu untersuchenden Frequenzspektrum entsprechen, was diese Vorrichtung derzeit auf ein Wellenlängenspektrum von 250 nm bis ca. 2,5 µm beschränkt. Der wesentliche Nachteil dieser Vorrichtung besteht jedoch darin, daß erhebliche Aufwendungen bzgl. der Stabilisierung der Intensitäten der einzelnen LED's betrieben werden muß, um quantitativ auswertbare Spektren zu erhalten.
Weiterhin beschreibt US-PS 5,050,989 ein Hadamard-Spektrometer, das eine Licht im Bereich von UV bis fernen IR emittierende Baugruppe, ein abbildendes Gitter, eine Empfängereinheit, einen Raum zur Aufnahme von spektral zu untersuchenden Proben, sowie elektronische Baugruppen zur Durchführung einer Hadamard-Transformation, Signalerfassung und - auswertung beinhaltet, bei dem für die Empfängereinheit eine Detektorzeile mit einem definierten Abstand der einzelnen Empfängerbereiche eingesetzt ist und bei dem für die Licht emittierende respektive reflektierende Baugruppe eine zellenförmige Baugruppe eingesetzt ist, deren einzelne Leuchtquellen nach dem Hadamard-Prinzip ansteuerbar sind, wobei jedoch die digitale Pixelauflösung der dort verwendeten Detektorbaugruppe die AußBsungsgrenze des Spektrometers beschränkt.

Ebenso sind Spektrometer bekannt. Monolithisches Miniaturspektrometer MMS 1, Carl-Zeiss, Geschäftsbereich Sondertechnik, Vertrieb optischer Komponenten, D-73446 Oberkochen, die als Empfangselemente Diodenzeilen einsetzen. Dabei ist es erforderlich, eine Spektrallinie auf mindestens drei benachbarte Detektorelemente abzubilden. Erst die dabei erhaltenen drei Meßsignale erlauben eine genaue Wellenlängenbestimmung. Das Auflösungsvermögen solcher Spektrometer für ein Wellenlängenintervall ist somit durch die Anzahl der Detektorelemente und ihren Abstand voneinander beschränkt.

Der Erfindung liegt die Aufgabe zugrunde, ein Hadamard-Spektrometer zu schaffen, das unter Verwendung konventioneller Detektorzeilen ein erhöhtes Auflösungsvermögen, eine verbesserte Wellenlängengenauigkeit und ein verbessertes Signal/Rausch-Verhältnis liefert und einen kleinen und kompakten Aufbau ermöglicht.

Die Aufgabe wird durch die Merkmale des ersten Patentanspruchs gelöst. Vorteilhafte Ausgestaltungen sind durch die abhängigen Ansprüche erfaßt.
Das Wesen der Erfindung besteht darin, daß sowohl für eine Spektren registrierende Empfängereinheit als auch für Licht emittierende respektive reflektierende Baugruppe jeweils zellenförmig ausgebildete Baugruppen mit mehreren einzelnen Empfängerbereichen und mehreren einzelnen Leuchtquellen zum Einsatz gelangen, weshalb im weiteren auch die Bezeichnung "Doppelarray" Verwendung findet, und das an sich bekannte Hadamard-Prinzip zur Anwendung gelangt. Wenn im Rahmen der Erfindung vom Hadamard-Prinzip gesprochen wird, soll darunter das Multiplexverfahren in der Spektroskopie mit Eingangsschaltmatrizen nach Hadamard verstanden werden.

Die Erfindung soll nachstehend anhand schematischer Ausführungsbeispiele näher erläutert werden. Es zeigen:
- Fig. 1: eine Diodenzeile nach dem Stand der Technik mit einer mindestens notwendigen dreifachen Abtastung einer Spektrallinie für eine genaue Wellenlängenbestinimung,
- Fig. 2: einen Aufbau eines Hadamard-Spektrometers mit seinen wesentlichen Baugruppen gemäß vorliegender Erfindung,
- Fig. 2a: eine Beleuchtungszeile als Teil des Hadamard-Spektrometers nach Fig. 2,
- Fig. 2b: eine Detektorzeile als Teil des Hadamard-Spektrometers nach Fig. 2,
- Fig. 3a bis d: beispielhaft die Ansteuerung eine Beleuchtungszeile mit vier reflektierenden Elementen einer Baugruppe nach Fig. 2a,
- Fig. 4a bis d: beispielhaft Spektralverteilungen, wie sie im Rahmen der Erfindung innerhalb von vier Messungen mit unterschiedlich angesteuerten einzelnen Leuchtquellen erhalten werden und
- Fig. 4e: einen entsprechend der Erfindung aufbereiteten spektralen Signalverlauf.

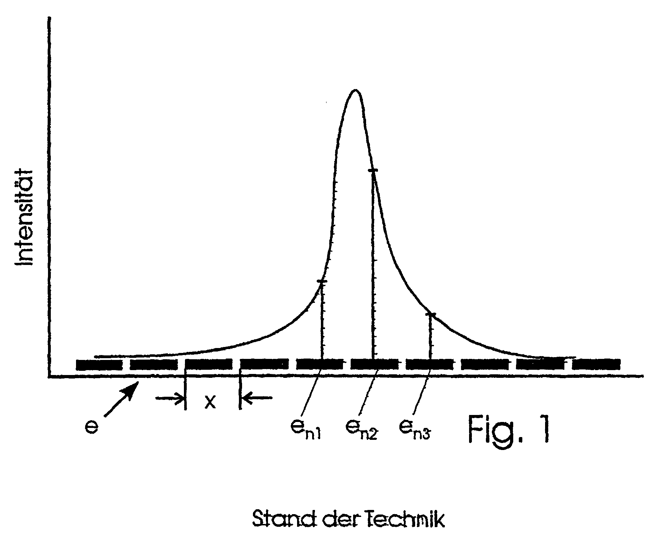

Figur 1 zeigt schematisch einen Teil eines konventionellen Diodenzeilenspektrometers mit mehreren nebeneinander angeordneten Empfangselementen e. Um eine genaue Wellenlängenbestimmung vornehmen zu können, ist es dabei erforderlich, eine Spektrallinie auf mindestens drei benachbarte Empfangselemente eₙ₁, eₙ₂, eₙ₃ abzubilden. Wie aus Fig. 1 ersichtlich, ist das Auflösungsvennögen eines solchen Spektrometers für ein Wellenlängenintervall somit durch die Anzahl und den Abstand x der einzelnen Empfangselemente e begrenzt.

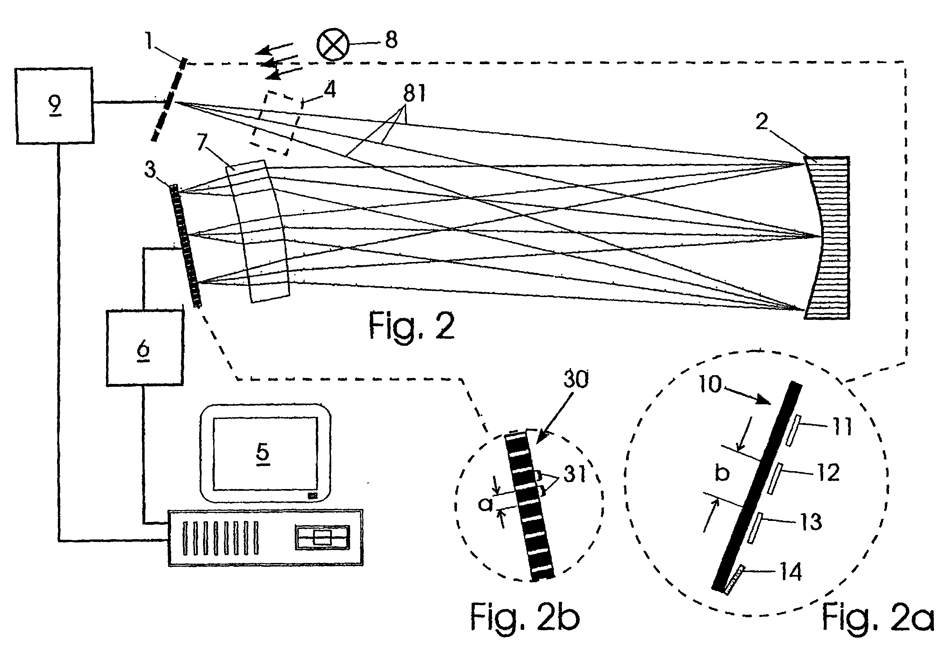

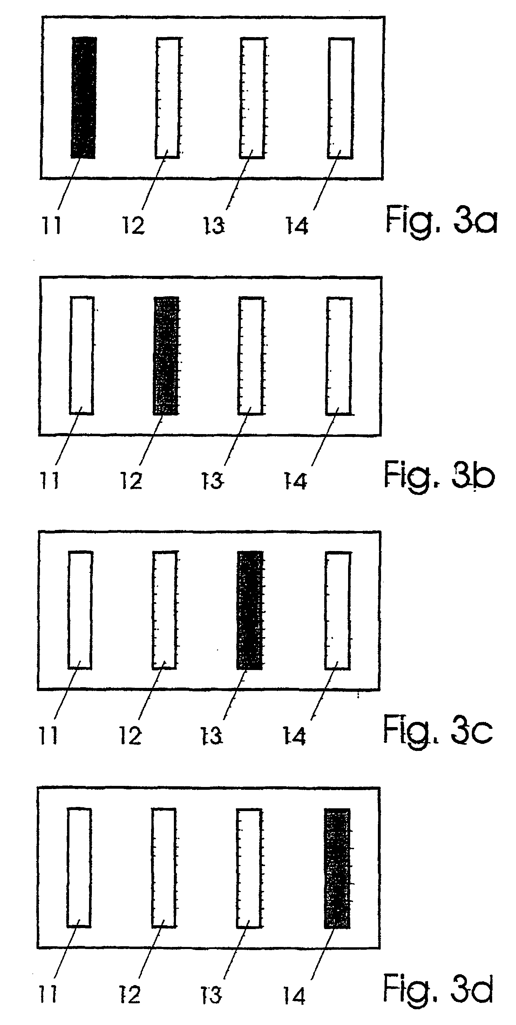

Figur 2 zeigt ein erstes Ausführungsbeispiel der Erfindung, mit den wesentlichen Baugruppen, durch die das Hadamard-Spektrometer gebildet ist. Im Beispiel ist die erste Baugruppe 1, die Licht, dargestellt durch drei parallele Pfeile, einer Strahlungsquelle 8 reflektiert, durch eine Zeile 10, die mit äquidistant beabstandeten und jeweils separat verkippbaren Mikrospiegeln versehen ist, gebildet. Im Beispiel soll von vier Mikrospiegeln 11...14 ausgegangen werden, wie in Fig. 2a näher dargestellt. Die Breite jedes Spiegels beträgt 20 µm und der Abstand der Spiegel je 183,5 µm. Weiterhin ist ein abbildendes Gitter 2 vorgesehen, das einen Durchmesser von 41 mm, einen Innenradius von 138 mm, eine Objektschnittweite von 156,9 mm und eine Bildschnittweite von 128 mm für die Mittenwellenlänge von 350 nm besitzt. Als Empfängereinheit 3 dient eine CCD-Zeile 30 mit 1024 Pixeln mit einem Mittenabstand von je 25 µm und damit einer Länge von 25,6 mm. Eine Ebnungslinse 7 ist der CCD-Zeile 30 vorgeschaltet, um eine Verbesserung der Auflösung in einem gesamten vorgebbaren Spektralbereich zu gewährleisten. Aus Gründen der Übersichtlichkeit sind in Fig. 2 lediglich markante Schwerpunktstrahlen 81 dargestellt.
Die Spiegel der Zeile 10, die im Beispiel die Leuchtquellen bilden, sind einzeln schaltbar. Sie werden nacheinander entsprechend eines vorgebbaren Musters, wie in den Figuren 3a bis 3d beispielhaft angedeutet, bevorzugt dem Muster der Zeilen der HADAMARD-S-Matrix geschaltet. Helle Flächen in den Figuren 3a bis 3d stehen für in Richtung des Gitters 2 reflektierende Spiegel, dunkle Flächen für ausgeblendete Spiegel, vgl. auch Spiegel 14 in Fig. 2a. Jeder reflektierende Spiegel erzeugt ein Spektrum auf der CCD-Zeile 30. Dort überlagern sich die Spektren der jeweils reflektierenden Spiegel.
Zur weiteren Erläuterung der Erfindung wird im Beispiel, anstelle der Wirkung einer bspw. in einem Raum 4 vorgesehenen, zu untersuchenden Probe, die 250 nm Spektrallinie einer Hg-Lampe verwendet und jeweils dreifach (von drei Spiegeln) erzeugt. Die Varianten der Muster werden nacheinander abgebildet, wozu im Beispiel vier Messungen, erforderlich sind. Über eine Ansteuereinheit 9, gesteuert von einer Auswerte- und Prozessoreinheit 5, sind die Mikrospiegel 11...14 entsprechend dem Hadamard-Prinzip ansteuerbar. Im Rahmen der Erfindung ist es wesentlich, daß die Mikrospiegel 11... 14 bis n, wobei n ≥ 3 einzuhalten ist, zueinander in einem definierten Abstand b so angeordnet sind, daß bei ihrer Abbildung auf die Detektorzeile 30, b ein ganzzahliges Vielfaches des vorgegebenen Abstandes a, den die Empfängerbereiche 31 zueinander aufweisen, zuzüglich oder abzüglich 1/n beträgt. Dabei ist es nicht erforderlich, daß die definierten Abstände eine stetige Folge von jeweils ganzzahligen Vielfachen des vorgegebenen Abstandes a zuzüglich oder abzüglich 1/n beträgt, sondern daß die einzelnen Leuchtquellen zueinander in einem Abstand b derart angeordnet sind, daß bei ihrer Abbildung auf die Detektorzeile der Abstand der Leuchtquellen ein ganzzahliges Vielfaches von m/n beträgt, wobei m eine ganze Zahl größer als n ist. So sind bspw. im Fall von n = 4 folgende Reihenfolgen möglich: 1/4,2/4, 3/4, 4/4 oder 2/4, 4/4, 3/4, 1/4 oder 1/4, 6/4,11/4, 16/4 oder 3/4, 6/4, 9/4, 12/4 oder 3/4, 9/4, 6/4, 12/4 oder 3/4, 10/4, 17/4, 24/4.

Wesentlich ist in diesem Beispiel also lediglich, daß stets alle Bruchteile von n jeweils ergänzt um ganzahlige Vielfache der Abstände in den Abbildungen der Leuchtquellen enthalten sind.
Bei einer sich anschließenden elektronischen Auswertung der während der einzelnen Messungen mittels der CCD-Zeile 30 gewonnenen, mit Hilfe einer Verstärkerbaugruppe 6 verstärkten spektralen Signale erfolgt in der Auswerteeinheit 5 eine "laterale" Rückverschiebung der Spektren, angepaßt dem jeweiligen Muster, mit dem die Mikrospiegel angesteuert wurden, sowie eine Hadamard-Transformation.

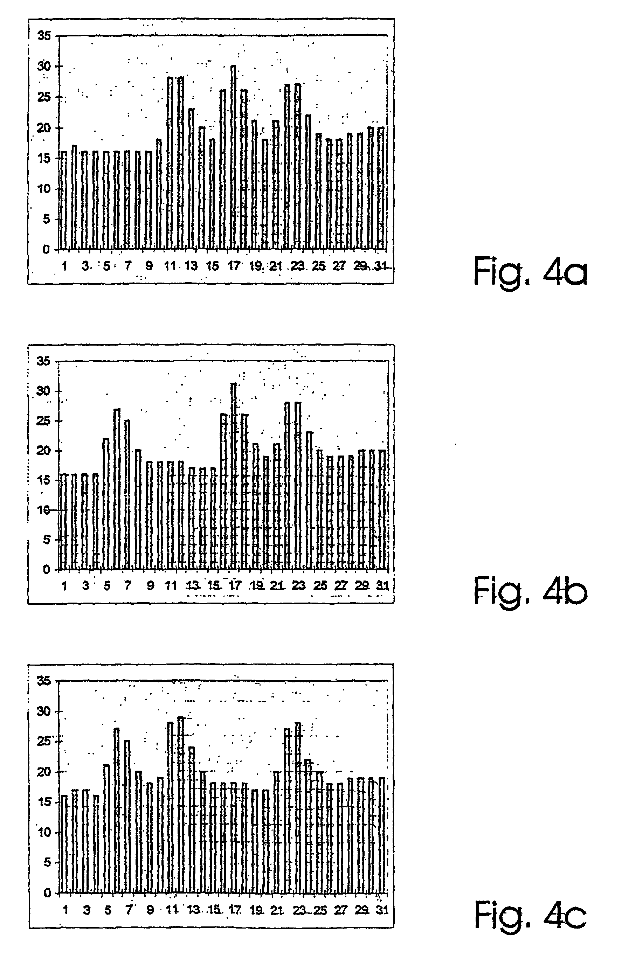

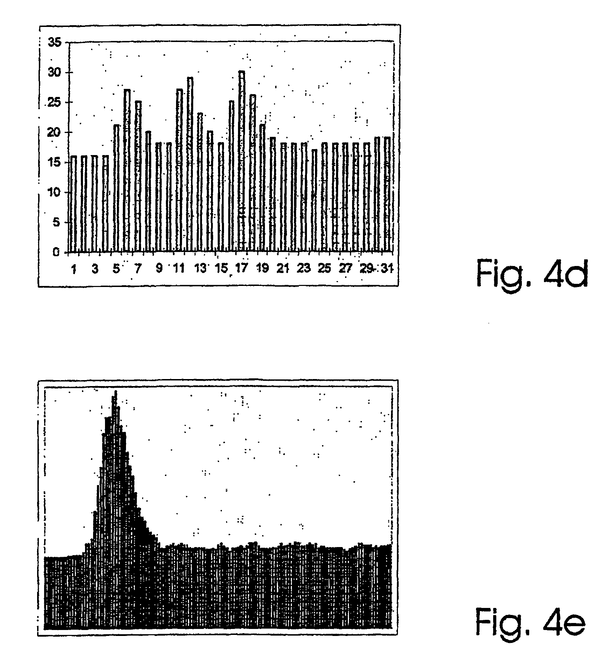

Die Figuren 4a bis 4d illustrieren die bei den genannten, im Beispiel erforderlichen vier Einzelmessungen erhaltenen Spektralverläufe entsprechend jeweiliger Kombinationen von reflektierenden Mikrospiegeln. Das experimentelle Endergebnis zeigt Fig. 4e. Die Form der Spektrallinie wird mit Hilfe der in Fig. 2 beschriebenen Anordnung einer Eingangsspiegelzeile für das Doppelarrayspektrometer mit nur vier Spiegeln aufgelöst. Die Auflösung wird deutlich erhöht. Gleichzeitig werden die Schwankungen von Einzelmessungen verringert. Das Signal/Rausch-Verhältnis wird verbessert.

Auf diesem Weg kann die pixelbegrenzte Auflösung verfügbarer Detektorzeilen um ca. den Faktor 3 gegenüber herkömmlichen Diodenarrayspektrometern erhöht werden. Mit Erhöhung der Zahl der Eirigangsspiegel ist das Signal/Rausch-Verhältnis weiter verbesserbar. Für bspw. 103 Eingangsspiegel kann bei gleicher Gesamtmeßzeit, die in 103 Einzelmessungen aufgeteilt wird, das Signal/Rausch-Verhältnis mindestens um den Faktor 10 verbessert werden.

Im Rahmen der Erfindung können für die emittierende bzw. reflektierende Baugruppe 1 neben der oben beschriebenen Ausführung in Form von Mikrospiegeln in analoger Weise einzeln verschließbare beleuchtete Spaltelemente einer Mikrospaltzeile, als auch einzeln ansteuerbare leuchtende Lichtleitfasern einer Lichtleitfaserzeile eingesetzt werden, wobei für die Anordnung der einzelnen Spalte bzw. der einzelnen Lichtleitfasern zueinander die gleichen Maßgaben, wie für die beschriebenen Mikrospiegel gelten.

Die erfindungsgemäße Ausbildung des Hadamard-Spektrometers ist in einem weiten Spektralbereich vom ultravioletten (UV) bis in den fernen infraroten Bereich (IR) einsetzbar. Anhand einer speziellen Meßaufgabe sollen die Vorteile der Erfindung hinsichtlich eines dadurch möglich werdenden kompakten Aufbaus des Spektrometers vergleichend skizziert werden:
Für das Monuitoring von kanzerogenem Benzol mit einer Konzentration von 1 ppm, z.B. im IR-Bereich, ist für ein Spektrometer mit leistungsfähigen Komponenten (CCD-Zeilen) aufgrund der geringen Extinktion ein Absorptionsweg in der Größenordnung von 60 cm und damit ein schon nicht mehr als handlich zu bezeichnendes Spektrometer erforderlich.
Mit einer Ausbildung des Hadamard-Spektormeters, wie oben beschrieben, benötigt eine Ausführung mit bspw. 103 Mikrospiegeln lediglich einen Absorptionsweg von nur noch ca. 6 cm. Auf diesem Weg sind kleine, kompakte Instrumente für verschiedenste Monitoringaufgaben mit verbesserten Geräteparametern angepaßt schaffbar.

### Bezugszeichenliste

- 1 -: emittierende respektive reflektierende Baugruppe
- 10 -: zellenförmige emittierende respektive reflektierende Baugruppe
- 11,12, 13,14 -: benachbarte Leuchtquellen
- n -: Anzahl der Leuchtquellen
- b -: Abstand der Leuchtquellen zueinander
- 2 -: abbildendes Gitter
- 3 -: Empfängereinheit
- 30 -: Detektorzeile (CCD-Zeile)
- 31 -: einzelne Empfängerbereiche der Detektorzeile
- a -: Abstand der einzelnen Empfängerbereiche 31 zueinander
- 4 -: Raum zur Aufnahme von spektral zu untersuchenden Proben
- 5 -: elektronische Baugruppen zur Durchführung einer Hadamard-Transformation, Steuerung einer Ansteuereinheit 9 und Signalauswertung
- 6 -: Baugruppen zu Signalerfassung (Verstärker)
- 7 -: Ebnungslinse
- 8 -: Strahlungsquelle
- 81 -: Schwerpunktstrahlen
- 9 -: Ansteuereinheit
- e -: Empfangselemente (Stand der Technik)
- eₙ₁, eₙ₂, eₙ₃ -: benachbarte Empfangselemente
- x -: Abstand x der einzelnen Empfangselemente e

## Patentansprüche

1. Hadamard-Spektrometer, das eine erste zeilenförmige Baugruppe (1), die Licht im Bereich von UV bis fernem IR emittiert oder von einer Strahlungsquelle (8) reflektiert und deren einzelne Leuchtquellen nach dem Hadamard-Prinzip ansteuerbar sind, ein abbildendes Gitter (2), eine Empfängereinheit (3) bestehend aus einer Detektorzeile mit in einem definierten Abstand a voneinander angeordneten einzelnen Empfängerbereichen (31), einen Raum (4) zur Aufnahme von spektral zu untersuchenden Proben und elektronische Baugruppen zur Durchführung einer Hadamard-Transformation (5) und zur Signalerfassung und -auswertung (6) beinhaltet, **dadurch gekennzeichnet, daß** die erste zeilenförmige Baugruppe (10) n benachbarte identische Leuchtquellen (11, 12, 13, 14) umfaßt, wobei n ≥ 3 einzuhalten ist, und die einzelnen Leuchtquellen (11, 12, 13, 14) zueinander in einem Abstand b derart angeordnet sind, daß bei ihrer Abbildung auf die Detektorzeile (31) der abgebildete Abstand von b ein ganzzahliges Vielfaches von a zuzüglich oder abzüglich a/n beträgt.

2. Hadamard-Spektrometer nach Anspruch 1, **dadurch gekennzeichnet, daß** für die Leuchtquellen (11, 12, 13, 14) einzeln ansteuerbare beleuchtete Mikrospiegelelemente einer Mikrospiegelzeile eingesetzt sind.

3. Hadamard-Spektrometer nach Anspruch 1, **dadurch gekennzeichnet, daß** für die Leuchtquellen (11, 12, 13, 14) einzeln verschließbare beleuchtete Spaltelemente einer Mikrospaitzeile eingesetzt sind.

4. Hadamard-Spektrometer nach Anspruch 1, **dadurch gekennzeichnet, daß** für die Leuchtquellen (11, 12, 13, 14) einzeln ansteuerbare leuchtende Lichtleitfasern einer Lichtleitfaserzeile eingesetzt sind.

## Claims

1. Hadamard-spectrometer comprising a first row-shaped unit (1), emitting light from the UV to the far IR range or reflecting light from a light source (8), the individual luminous sources thereof being adapted to be controlled according to the Hadamard-principle, an imaging grating (2), a detecting unit (3), if required, constituted of a detector row composed of individual detecting ranges (31) being arranged to one another at a defined distance a, a receptacle (4) for receiving samples to be spectrally analyzed, and electronic units for performing a Hadamard-transformation (5) and for signal detection and signal evaluation (6), **characterized in that** the first row-shaped unit (10) comprises n adjacent identical luminous sources (11, 12, 13, 14), wherein n ≥ 3 has to be kept to, and wherein the individual luminous sources (11, 12, 13, 14) are arranged to one another at a distance b in such a manner that, when imaged upon the detector row (31), the imaged distance b amounts to an integral multiple of a plus a/n or minus a/n

2. Hadamard-spectrometer according to claim 1, **characterized in that** individually selectable illuminated micro mirror elements of a micro mirror row are used for the luminous sources (11, 12, 13, 14).

3. Hadamard-spectrometer according to claim 1, **characterized in that** individually closeable illuminated slit elements of a micro slit row are used for the luminous sources (11, 12, 13, 14).

4. Hadamard-spectrometer according to claim 1, **characterized in that** individually selectable luminous light conducting fibers of a fiber optic row are used for the luminous sources (11, 12, 13, 14).

## Revendications

1. Le Spectromètre Hadamard comprenant un premier ensemble linéaire (1) de composants, émettant de la lumière dans une plage allant de l'extrémité UV du spectre à son autre extrémité IR ou réfléchissant de la lumière provenant d'une source lumineuse (8), les sources lumineuses individuelles pouvant être pilotées suivant le principe Hadamard, une grille fournissant l'image (2), une unité réceptrice (3) comprenant un détecteur linéaire comportant des zones réceptrices (31) disposées en ligne et écartées les unes des autres dans une dimension définie a, un espace (4) pour recevoir des épreuves à étudier par voie spectrale et des composants électroniques destinés à effectuer la transformation Hadamard (5) et à saisir et interpréter les signaux (6), est **caractérisé en ce que** le premier composant linéaire électronique (10) comprend n sources lumineuses identiques (11,12,13,14) disposées dans une distance b les unes à côté des autres, tout en respectant toujours n ≥ 3, de sorte que lors de la présentation de leur image sur le détecteur linéaire (31) la distance b est un multiple du nombre entier de a, à un écart de plus ou moins a/n.

2. Le spectromètre Hadamard suivant la revendication 1 est **caractérisé en ce que** ses sources lumineuses (11, 12, 13, 14) sont composées de micro-miroirs éclairés, configurables individuellement et disposés en ligne réfléchissante.

3. Le spectromètre Hadamard suivant la revendication 1 est **caractérisé en ce que** les sources lumineuses (11, 12, 13, 14) sont composées de microfentes éclairées disposées en ligne et capables de se fermer individuellement.

4. Le spectromètre Hadamard suivant la revendication 1 est **caractérisé en ce que** les sources lumineuses (11, 12, 13, 14) sont composées de fibres optiques lumineuses alignées, pouvant être pilotées individuellement et disposées en ligne.
